# EUROPÄISCHE PATENTANMELDUNG

(11) **EP 4 725 915 A1**
(43) Veröffentlichungstag der Anmeldung: **15.04.2026**
(21) Anmeldenummer: 24205787.5
(22) Anmeldetag: 10.10.2024
(51) Int. Cl.: C02F 1/467, C25B 1/26, C25B 15/02, C02F 1/46, C02F 1/461

(54) **VERFAHREN ZUM BETRIEB VON ELEKTROLYSEZELLEN**

(71) Anmelder: Lutz-Jesco GmbH, 97877 Wertheim (DE)
(72) Erfinder: MEYER, Steffen, 30167 Hannover (DE); LINDEMEYER, Lutz-Jesco, 97877 Wertheim (DE)
(74) Vertreter: Christ, Niko

(57) **Zusammenfassung**

Beim Betrieb von Elektrolysezellen, wie diese etwa in einem Schwimmbadbetrieb erforderlich sind, ist es regelmäßig erforderlich, sich anlagernden Kalk von den Elektroden abzulösen. Neben einer aufwändigen Säurespülung besteht die Möglichkeit, mit einer Umpolung der Elektrolysepakete der Elektrolysezelle zu arbeiten. Hierbei verändert sich jedoch aufgrund der Trägheit des Systems zeitweilig der Wert der angestrebten Chlorkonzentration im Wasser.

Die Erfindung sieht dafür vor, wenigstens zwei Elektrolysepakete zu betreiben, wobei jeweils ein Elektrolysepaket in einer Betriebspolung in Betrieb bleibt, während die andere zur Kalkabscheidung umgepolt wird. Hierdurch schwingt das System bereits erheblich weniger über und zusätzliche Maßnahmen verbessern das Verhalten des Systems noch weiter.

## Beschreibung

Die vorliegende Erfindung betrifft ein Verfahren zum Betrieb mit einer Salzlösung umspülter Elektrolysezellen zur Umwandlung von Chlor aus gelöstem Salz, wobei eine Elektrolysezelle wenigstens ein Elektrolysepaket aus mehreren abwechselnd geschichteten und mit einer Steuereinheit verbundenen Anodenplatten und Kathodenplatten aufweist, wobei im Fall einer Anlagerung von Kalk auf dem Elektrolysepaket dieses vorübergehend von einer Betriebspolung in eine Umkehrpolung umgeschaltet und der angelagerte Kalk abgeschieden wird.

Auf dem Gebiet der Elektrolyse zur Umwandlung von Chlor aus gelöstem Salz ist es üblich, Elektrolysezellen zu verwenden, die aus mehreren abwechselnd geschichteten Anoden- und Kathodenplatten bestehen. Diese Platten sind mit einer Steuereinheit verbunden, die den Betrieb der Elektrolysezellen steuert oder regelt. Eine der Hauptanwendungen ist das Desinfizieren von Schwimmbeckenwasser. In einem solchen Schwimmbecken wird ein Chlorwert durch einen Regler gehalten, beispielsweise bei einem Sollwert von 0,5 mg/l. Das geschieht über die Ansteuerung einer oder mehrerer inline montierter Chlor-Alkali-Elektrolysezellen, die auch jeweils mehrere Elektrolysepakete haben können. Je nach Bedarf werden die Elektrolysepakete bestromt und Wandeln in dem Wasser enthaltenes Salz unter anderem in Chlor um.

Wenn Ereignisse eintreten, wie etwa klassisch das Eintauchen von Schwimmern in das Wasser, so werden Bakterien und Schweiß eingetragen und die Chlorkonzentration sinkt. Entsprechend steuert die Steuereinheit dagegen, betreibt also die Elektrolysepakete bei höherer Stromstärke, so dass mehr Chlor erzeugt wird. Der Wert der Chlorkonzentration ist daher nicht konstant, sondern schwankt leicht um den Sollwert.

Ein bekanntes Problem bei der Verwendung solcher Elektrolysezellen ist die Anlagerung von Kalk auf den Elektrolysepaketen, was die Effizienz der Chlorerzeugung erheblich beeinträchtigen kann. Um dieses Problem zu lösen, sind zwei Möglichkeiten bekannt, nämlich entweder das Spülen mit einer Säure oder die Verwendung einer Umkehrpolung, bei der die Betriebspolung der Elektrolysezellen umgekehrt wird, um den angelagerten Kalk abzuscheiden. Die Elektrolysepakete werden insoweit praktisch rückwärts betrieben. Bekannte Systeme umfassen hierbei typischerweise eine einzige Steuereinheit, die alle Elektrolysepakete gleichzeitig steuert, was die Chlorproduktion während der Umkehrpolung unterbricht. Hieraus folgt ein zeitweiliges Absinken der Chlorkonzentration, worauf das System nach dem Zurückpolen der Elektrolysepakete reagieren muss. Die frisch gereinigte Elektrolysezelle wird in einem solchen Fall aufgrund des niedrigen Chlorwerts auf einem Maximalwert betrieben, wodurch die Chlorkonzentration stark ansteigt und aufgrund der Trägheit des Systems über den Sollwert hinausgeht. Dies führt zu einem Überschwingen des Systems, das sich in der Folgezeit dann wieder einpendelt. Ein Betrieb oberhalb des Sollwerts ist indes ohne Weiteres möglich, weil die Auslegung der Elektrolysezelle im Regelfall so gewählt ist, dass sie zwischen 15 % und 40 % angesteuert wird. Diese Überdimensionierung ist damit begründet, dass der Betreiber die Möglichkeit einer Hochchlorung vorsehen muss.

Vor diesem Hintergrund liegt der vorliegenden Erfindung die Aufgabe zu Grunde, ein Verfahren zum Betrieb von Elektrolysezellen vorzuschlagen, welches einen möglichst gleichmäßigen Verlauf der Chlorkonzentration unter Vermeidung von Überschwingungen ermöglicht.

Gelöst wird diese Aufgabe durch ein Verfahren zum Betrieb von Elektrolysezellen gemäß den Merkmalen des unabhängigen Anspruchs 1. Sinnvolle Ausgestaltungen eines solchen Verfahrens können den sich anschließenden abhängigen Ansprüchen entnommen werden.

Erfindungsgemäß ist ein Verfahren zum Betrieb von Elektrolysezellen vorgesehen, bei dem eine Salzlösung zur Umwandlung von Chlor aus gelöstem Salz verwendet wird. Eine Elektrolysezelle umfasst dabei mindestens ein Elektrolysepaket, das aus mehreren abwechselnd geschichteten Anodenplatten und Kathodenplatten besteht, die mit einer Steuereinheit verbunden sind. Ein wesentliches Merkmal dieses Verfahrens ist die Fähigkeit, Kalkablagerungen auf den Elektrolysepaketen zu bewältigen. Im Falle einer Kalkablagerung wird das betroffene Elektrolysepaket vorübergehend von einer Betriebspolung in eine Umkehrpolung umgeschaltet, wodurch der angelagerte Kalk abgeschieden wird. Dies trägt zur Verlängerung der Lebensdauer der Elektrolysezellen und zur Aufrechterhaltung ihrer Effizienz bei. Ein herausragender Aspekt dieses Verfahrens ist die separate Ansteuerung von mindestens zwei Elektrolysepaketen durch die Steuereinheit. Während ein erstes Elektrolysepaket in der Umkehrpolung betrieben wird, kann ein zweites Elektrolysepaket in der Betriebspolung weiterarbeiten. Dieses Vorgehen ermöglicht eine kontinuierliche Elektrolyse, selbst während der Reinigung eines Elektrolysepakets, was zu einer höheren Gesamteffizienz und einer Reduzierung von Ausfallzeiten führt. Die Steuereinheit spielt eine entscheidende Rolle bei der Überwachung und Steuerung des Betriebs der Elektrolysepakete, indem sie die Umschaltung zwischen Betriebspolung und Umkehrpolung präzise steuert beziehungsweise regelt.

Gemäß einer ersten Ausführungsform werden innerhalb einer Elektrolysezelle wenigstens ein erstes Elektrolysepaket und wenigstens ein zweites Elektrolysepaket gemeinsam betrieben und von der Steuereinheit separat angesteuert. Die Steuereinheit kommuniziert dabei über dedizierte Steuerleitungen mit jedem Elektrolysepaket, wodurch sichergestellt wird, dass die Umkehrpolung und die Betriebspolung unabhängig voneinander für jedes Paket aktiviert werden können. Beispielsweise kann die Steuereinheit bei einer Anlagerung von Kalk auf einem Elektrolysepaket dieses gezielt in die Umkehrpolung schalten, während das andere Elektrolysepaket weiterhin in der Betriebspolung arbeitet. Dies verhindert eine Unterbrechung des Gesamtbetriebs der Elektrolysezelle und gewährleistet eine kontinuierliche Produktion von Chlor.

Mit besonderem Vorteil kann es vorgesehen sein, dass während eines Wechsels von der Betriebspolung zur Umkehrpolung bei dem wenigstens einen ersten Elektrolysepaket das wenigstens ein zweites Elektrolysepaket in Betriebspolung stärker angesteuert wird. Die Steuereinheit überwacht kontinuierlich den Zustand der Elektrolysepakete und erkennt, wann ein Wechsel von der Betriebspolung zur Umkehrpolung erforderlich ist, um Kalkablagerungen zu entfernen. Während dieses Wechsels erhöht die Steuereinheit die Stromzufuhr an das zweite Elektrolysepaket, das weiterhin in der Betriebspolung arbeitet. Dies stellt sicher, dass die Gesamtleistung des Elektrolysesystems nicht beeinträchtigt wird und die Produktion von Chlor aus der Salzlösung aufrechterhalten bleibt. Eine entsprechende Reserve ist in den Elektrolysepaketen, wie eingangs beschrieben, notwendigerweise vorhanden. Die verstärkte Ansteuerung des zweiten Elektrolysepakets kompensiert die temporäre Leistungsreduktion des ersten Elektrolysepakets, das sich in der Umkehrpolung befindet.

Weiter kann es vorgesehen sein, dass die stärkere Ansteuerung, vorzugsweise mithilfe einer Regeleinheit, so gewählt wird, dass alle zweiten Elektrolysepakete die wegfallende Chlorumwandlung aller ersten Elektrolysepakete ausgleichen. Die Regeleinheit spielt auch hierbei eine zentrale Rolle, indem sie kontinuierlich die Betriebszustände der Elektrolysepakete überwacht und steuert. Wenn ein erstes Elektrolysepaket in die Umkehrpolung geschaltet wird, um Kalkablagerungen zu entfernen, so überwacht die Steuereinheit deren Zustand weiter und erhöht automatisch die Ansteuerung der zweiten Elektrolysepakete, unabhängig davon, wie viele zweite Elektrolysepakete vorhanden sind. Diese stärkere Ansteuerung der zweiten Elektrolysepakete kompensiert die temporäre Reduktion der Chlorumwandlungskapazität der ersten Elektrolysepakete. Durch diese dynamische Anpassung wird sichergestellt, dass die Gesamtleistung des Elektrolyseprozesses nicht beeinträchtigt wird, selbst wenn einzelne Elektrolysepakete vorübergehend in der Umkehrpolung betrieben werden.

In konkreter Ausgestaltung des Verfahrens wird das erste Elektrolysepaket vor dem Betrieb in Umkehrpolung kontinuierlich heruntergefahren und bleibt für eine Pausenzeit stromlos. Das kontinuierliche Herunterfahren des ersten Elektrolysepakets vor dem Betrieb in Umkehrpolung bedeutet, dass die Stromzufuhr allmählich reduziert wird, anstatt abrupt abgeschaltet zu werden. Dies kann durch eine programmierte Sequenz in der Steuereinheit erfolgen, die den Stromfluss in kontrollierten Schritten verringert. Diese Vorgehensweise minimiert die mechanischen und elektrischen Belastungen auf die Elektrolysezelle, was die Lebensdauer der Elektrolysepakete verlängern kann. Nachdem das erste Elektrolysepaket heruntergefahren wurde, bleibt es für eine Pausenzeit stromlos. Diese Pausenzeit ist eine definierte Zeitspanne, während der das Elektrolysepaket keinen Strom erhält. Diese stromlose Phase ermöglicht es, dass sich das Elektrolysepaket stabilisieren kannund Restladungen abgebaut werden können und Wasserstoff, der sich in der empfindlichen Titanbeschichtung der Elektrolysepakete abgesetzt hat, herausgespült wird.

Weiter kann mit einigem Vorteil vorgesehen sein, dass das erste Elektrolysepaket nach der Umschaltung in die Umkehrpolung zunächst nach einer Exponentialkurve angefahren wird. Diese spezifische Vorgehensweise bringt mehrere Vorteile und technische Effekte mit sich, die die Effizienz und Langlebigkeit des Elektrolyseprozesses verbessern. Die Exponentialkurve stellt sicher, dass der Übergang von der Betriebspolung zur Umkehrpolung nicht abrupt erfolgt, sondern graduell und kontrolliert. Dies minimiert die mechanischen und thermischen Belastungen auf die Elektrolysezellen und die Elektrodenmaterialien, wodurch die Lebensdauer der Komponenten verlängert wird. Darüber hinaus kann so der Restwasserstoff langsam aus der Titanbeschichtung entweichen. Würde die Elektrolysezelle oder das Elektrolysepaket schlagartig umgepolt, so würde der Wasserstoff regelrecht Teilchen aus der empfindlichen Beschichtung heraussprengen. Solche mechanischen Belastungen sollen durch das langsamere Anfahren nach Möglichkeit vermieden werden.

Gemäß einer weiteren Ausführungsform wird das wenigstens eine zweite Elektrolysepaket erst dann in die Umkehrpolung umgeschaltet, wenn das wenigstens eine erste Elektrolysepaket wieder in der Betriebspolung betrieben wird und das System wieder eingeschwungen ist. Dies verhindert ein Aufschwingen oder noch stärkeres Überschwingen des Systems, wie dies bereits im Stand der Technik der Fall gewesen ist. Vielmehr wird durch diese koordinierte Steuerung die Kontinuität des Elektrolyseprozesses gewährleistet.

Die vorstehende Erfindung wird im Folgenden anhand eines Ausführungsbeispiels näher erläutert.

Es zeigen
- Figur 1: eine Anordnung aus drei Elektrolysepaketen in einer schematischen Darstellung,
- Figur 2: eine Elektrolysezelle mit zwei Elektrolysepaketen in einer schematischen Darstellung,
- Figur 3: den Verlauf der Chlorkonzentration und des Stroms in einem Elektrolysepaket gemäß vorbekanntem Verfahren über der Zeit,
- Figur 4: den Verlauf der Chlorkonzentration und des Stroms in zwei Elektrolysepaketen gemäß der Erfindung über der Zeit,
- Figur 5: den Verlauf der Chlorkonzentration und des Stroms in zwei Elektrolysepaketen gemäß einem alternativen Verfahren gemäß der Erfindung über der Zeit, sowie
- Figur 6: mögliche Funktionen für den Anlauf der Elektrolysepakete nach der Umpolung als Funktion des Stroms über der Zeit.

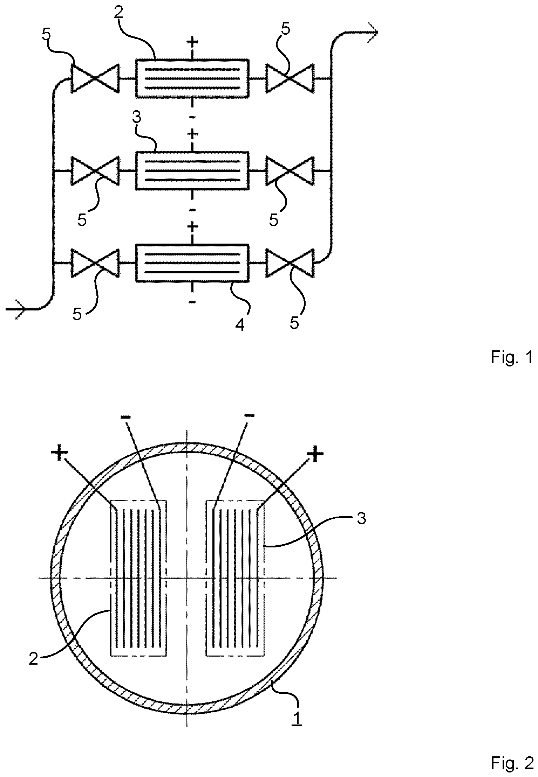

Figur 1 zeigt eine schematische Darstellung eines Systems zur Elektrolyse von Salzlösungen, bestehend aus mehreren Elektrolysepaketen 2, 3, 4, die zueinander parallel geschaltet sind. Jedes Elektrolysepaket umfasst wenigstens eine Anodenplatte und wenigstens eine Kathodenplatte, vorzugsweise jeweils eine Mehrzahl solcher Anodenplatten und Kathodenplatten, die abwechselnd geschichtet und mit einer Steuereinheit verbunden sind. Die Elektrolysepakete sind so angeordnet, dass sie separat von der Steuereinheit angesteuert werden können. Die Elektrolysepakete 2, 3, 4 sind jeweils mit Einlass- und Auslassventilen 5 ausgestattet, die den Fluss des Wassers, hier im Wesentlichen der Salzlösung, steuern. Diese Ventile 5 ermöglichen es, die Salzlösung gezielt durch die Elektrolysepakete 2, 3, 4 zu leiten und bei Bedarf einzelne Elektrolysepakete 2, 3, 4 vom Betrieb zu trennen oder in den Betrieb einzuschalten. Die Einlassventile 5 befinden sich an den Eingängen der Elektrolysepakete 2, 3, 4, während die Auslassventile 5 an den Ausgängen der Elektrolysepakete 2, 3, 4 positioniert sind.

Während des Betriebs wird die Salzlösung durch die Einlassventile 5 in die Elektrolysepakete 2, 3, 4 geleitet, wo die Elektrolyse stattfindet. Die Anodenplatten und Kathodenplatten in den Elektrolysepaketen sind so geschaltet, dass sie eine Betriebspolung oder eine Umkehrpolung annehmen können. Im Falle einer Anlagerung von Kalk auf den Elektrolysepaketen wird die Polung der betroffenen Pakete vorübergehend in die Umkehrpolung umgekehrt, um den Kalk abzuscheiden.

Figur 2 zeigt eine detaillierte Querschnittsansicht einer Elektrolysezelle 1, die zwei Elektrolysepakete 2, 3 enthält. Die Elektrolysezelle 1 ist von einem Gehäuse umgeben, das die Elektrolysepakete 2, 3 schützt und die Salzlösung innerhalb der Zelle hält. Die Elektrolysepakete 2, 3 sind parallel zueinander angeordnet. Die Anodenplatten und Kathodenplatten in den Elektrolysepaketen 2, 3 sind abwechselnd geschichtet und mit den entsprechenden elektrischen Anschlüssen verbunden. Die Anschlüsse sind so gestaltet, dass sie eine separate Ansteuerung der Elektrolysepakete 2, 3 durch die hier nicht gezeigte Steuereinheit ermöglichen. Dies erlaubt es, während des Betriebs eines ersten Elektrolysepakets 2 in der Umkehrpolung ein zweites Elektrolysepaket 3 in der Betriebspolung weiter zu betreiben. Die Steuereinheit ist so konfiguriert, dass sie den Wechsel von der Betriebspolung zur Umkehrpolung und umgekehrt steuern kann. Während des Wechsels von der Betriebspolung zur Umkehrpolung wird das betroffene erste Elektrolysepaket 2 kontinuierlich heruntergefahren und bleibt für eine bestimmte Pausenzeit stromlos, damit der Wasserstoff aus der Titanbeschichtung entweichen kann. Nach der Pausenzeit wird das Elektrolysepaket zunächst nach einer Exponentialkurve wieder angefahren, um eine schonende Wiederaufnahme des Betriebs zu gewährleisten.

Das System ist so ausgelegt, dass während der Umkehrpolung eines ersten Elektrolysepakets 2 das zweite Elektrolysepaket 3 stärker angesteuert wird, um die bei dem ersten Elektrolysepaket 2 wegfallende Chlorumwandlung auszugleichen. Dies wird vorzugsweise mithilfe einer Regeleinheit erreicht, welche die Ansteuerung der Elektrolysepakete 2, 3 entsprechend anpasst. Eine spätere Umschaltung des zweiten Elektrolysepakets 3 in die Umkehrpolung erfolgt erst dann, wenn das zuvor in der Umkehrpolung betriebene erste Elektrolysepaket wieder in der Betriebspolung betrieben wird und das System wieder stabilisiert ist. Dies stellt sicher, dass die Chlorumwandlung kontinuierlich und effizient erfolgt, ohne Unterbrechungen oder Leistungseinbußen und ohne zu starkes Überschwingen.

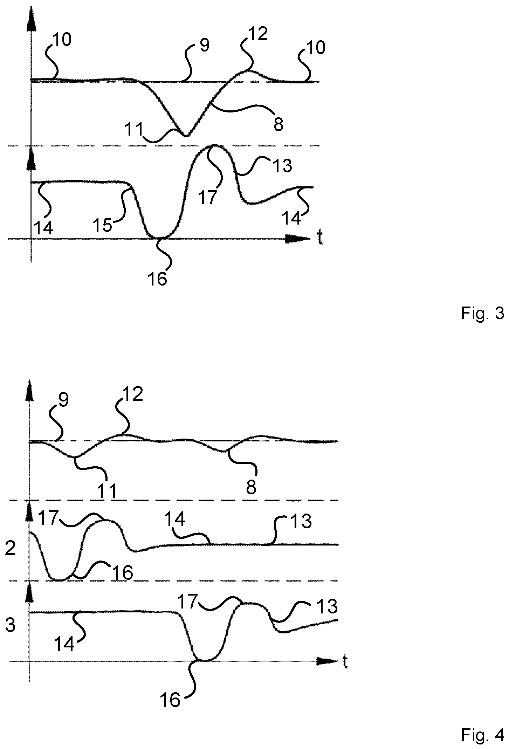

Figur 3 zeigt ein Diagramm, das den zeitlichen Verlauf der Spannung und des Stroms in einem Elektrolysepaket gemäß dem Stand der Technik während des Umschaltens von der Betriebspolung in die Umkehrpolung und zurück zur Betriebspolung veranschaulicht. Die vertikale Achse stellt im oberen Bereich die Chlorkonzentration 8 und im unteren Bereich den Strom 13 dar, während die horizontale Achse die Zeit t darstellt.

Die Elektrolysezellen müssen nach einer vorgegebenen Zeit oder nach einem Grenzwert in der Elektrolysespannung zur Reinigung umgepolt werden. Dazu wird die Elektrolysezelle heruntergefahren, wozu eine Stromsenkung 15 erfolgt. In Punkt 16 ist noch eine kurze Pausenzeit in der Ansteuerung einprogrammiert, damit Restladungen abgebaut werden können und Wasserstoff, der sich in der empfindlichen Titanbeschichtung abgesetzt hat, herausgespült wird. Da kein Chlor und andere desinfizierende, also oxidierende Stoffe mehr in dieser Zeit produziert werden, fällt der Chlorwert bis zum Punkt 11 ab, hier mit Verzögerung dargestellt, da der Regelkreis am Beispiel eines Schwimmbeckens eine große Totzeit hat. Das Elektrolysepaket wird jetzt umgepolt, also Anode und Kathode vertauscht, und wieder ganz langsam hochgefahren, damit der Restwassersstoff langsam aus der Titanbeschichtung entweichen kann. Da der Chlorwert im Becken gefallen ist und die Mess- und Regelungstechnik das erst mit langer Verzögerung erfährt, wird die Elektrolysezelle je nach eingestellten Regelparametern deutlich über die vorherige Ansteuerung hinaus hochgefahren, unter Umständen bis zu einem Maximum 17 von 100%. Das wiederum führt zu einem Überschwingen 12 des Systems. Nach einiger Zeit hat sich das System wieder auf den optimalen Betriebszustand eingestellt, erreicht also wieder einen konstanten Strom 14 und eine konstante Chlorkonzentration 10.

Figur 4 zeigt ein ähnliches Diagramm, jedoch mit zusätzlichen Details zur Steuerung und Regelung während des Umpolvorgangs. Die Elektrolysezelle ist hier entweder mit zwei Elektrolysepaketen 2 und 3 versehen, die nacheinander umgepolt werden, oder das System besteht aus mehreren Elektrolysezellen, die nacheinander umgepolt werden. Wie dargestellt, wird zunächst ein erstes Elektrolysepaket 2 umgepolt, danach das zweite Elektrolysepaket 3. Entsprechend sinkt der Wert der Chlorkonzentration 8 im Bereich der Minima 11 nicht mehr so weit ab und weist umgekehrt auch nicht mehr so starke Überschwingungen 12 auf, da hier das jeweils andere Elektrolysepaket 3, 2 weiter Chlor produzieren kann. Der Wert der Chlorkonzentration 8 ist durchgehend näher am Sollwert 9. Das kann so ebenso mit mehreren Elektrolysezellen oder mehreren Zellenpaketen erfolgen, sodass hier eine Kaskadenschaltung möglich gemacht wird.

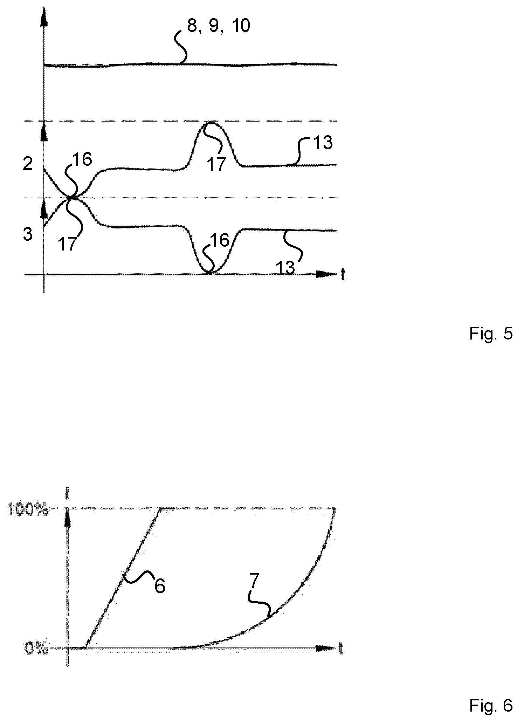

Um dieses System weiter zu verbessern, zeigt Figur 5 eine weitere Lösung mit einer Kompensation. Diese bewirkt, dass es im Regelbetrieb im Schwimmbad gar kein Absinken des Chlorwertes 8 gibt. Dieser schwingt nur leicht um den Sollwert 9 und bleibt praktisch bei einem konstanten Wert 10. Dazu wird die Ansteuerung des zweiten Elektrolysepakets 3 verdoppelt, während das erste Elektrolysepaket 2 in der Umpolung ist, und später umgekehrt.

Figur 6 zeigt ein Diagramm zum Anfahren des Elektrolysepakets 2 oder 3 nach der Umpolung. Um den negativen Einfluss der Wasserstoff-Entweichung in der Umpolungsphase zu reduzieren, kommt anstelle der üblichen proportionalen Rampe 6 eine Exponentialfunktion 7 zur Anwendung. Diese soll vermeiden, dass beim Wiederanlauf schlagartig Gas unter der Oberflächenbeschichtung freigesetzt wird und diese dadurch abgetragen wird.

Vorstehend beschrieben ist somit ein Verfahren zum Betrieb von Elektrolysezellen, welches einen möglichst gleichmäßigen Verlauf der Chlorkonzentration unter Vermeidung von Überschwingungen ermöglicht.

### BEZUGSZEICHENLISTE

- 1: Elektrolysezelle
- 2: erstes Elektrolysepaket
- 3: zweites Elektrolysepaket
- 4: drittes Elektrolysepaket
- 5: Ventil
- 6: Rampenfunktion
- 7: Exponentialfunktion
- 8: Chlorkonzentration
- 9: Sollwert
- 10: konstante Konzentration
- 11: Minimum
- 12: Überschwingen
- 13: Strom
- 14: konstanter Strom
- 15: Stromsenkung
- 16: Umpolung
- 17: Maximum

## Patentansprüche

1. Verfahren zum Betrieb mit einer Salzlösung umspülter Elektrolysezellen zur Umwandlung von Chlor aus gelöstem Salz, wobei eine Elektrolysezelle wenigstens ein Elektrolysepaket aus mehreren abwechselnd geschichteten und mit einer Steuereinheit verbundenen Anodenplatten und Kathodenplatten aufweist, wobei im Fall einer Anlagerung von Kalk auf dem Elektrolysepaket dieses vorübergehend von einer Betriebspolung in eine Umkehrpolung umgeschaltet und der angelagerte Kalk abgeschieden wird,
**dadurch gekennzeichnet, dass** wenigstens zwei Elektrolysepakete separat von der Steuereinheit angesteuert werden, wobei während eines Betriebs wenigstens eines ersten Elektrolysepakets in der Umkehrpolung wenigstens ein zweites Elektrolysepaket in der Betriebspolung weiterbetrieben wird.

2. Verfahren gemäß Anspruch 1, **dadurch gekennzeichnet, dass** innerhalb einer Elektrolysezelle wenigstens ein erstes Elektrolysepaket und wenigstens ein zweites Elektrolysepaket gemeinsam betrieben und von der Steuereinheit separat angesteuert werden.

3. Verfahren gemäß einem der Ansprüche 1 oder 2, **dadurch gekennzeichnet, dass** während eines Wechsels von der Betriebspolung zur Umkehrpolung bei dem wenigstens einen ersten Elektrolysepaket das wenigstens eine zweite Elektrolysepaket in Betriebspolung stärker angesteuert wird.

4. Verfahren gemäß Anspruch 3, **dadurch gekennzeichnet, dass** die stärkere Ansteuerung, vorzugsweise mithilfe einer Regeleinheit, so gewählt wird, dass alle zweiten Elektrolysepakete die wegfallende Chlorerzeugung aller ersten Elektrolysepakete ausgleichen.

5. Verfahren gemäß einem der vorhergehenden Ansprüche, **dadurch gekennzeichnet, dass** das erste Elektrolysepaket vor dem Betrieb in Umkehrpolung kontinuierlich heruntergefahren und für eine Pausenzeit stromlos bleibt.

6. Verfahren gemäß einem der vorhergehenden Ansprüche, **dadurch gekennzeichnet, dass** das erste Elektrolysepaket nach der Umschaltung in die Umkehrpolung zunächst nach einer Exponentialkurve angefahren wird

7. Verfahren gemäß einem der vorhergehenden Ansprüche, **dadurch gekennzeichnet, dass** das wenigstens eine zweite Elektrolysepaket erst dann in die Umkehrpolung umgeschaltet wird, wenn das wenigstens eine erste Elektrolysepaket wieder in der Betriebspolung betrieben wird und das System wieder eingeschwungen ist.
